# EUROPÄISCHE PATENTSCHRIFT

(11) **EP 2 751 861 B1**
(45) Veröffentlichungstag und Bekanntmachung des Hinweises auf die Patenterteilung: **03.06.2015**
(21) Anmeldenummer: 12737221.7
(22) Anmeldetag: 19.07.2012
(51) Int. Cl.: H01M 8/04

(54) **VERFAHREN ZUM KÜHLEN EINER BRENNSTOFFZELLE**
METHOD FOR COOLING A FUEL CELL
MÉTHODE DE REFROIDISSEMENT DE PILE À COMBUSTIBLE

(30) Priorität: 30.08.2011 DE 102011111945
(43) Veröffentlichungstag der Anmeldung: 09.07.2014
(73) Patentinhaber: Daimler AG, 70327 Stuttgart (DE)
(72) Erfinder: SCHWAB, Clemens, 73240 Wendlingen (DE)
(74) Vertreter: JENSEN & SON
(86) Internationale Anmeldenummer: PCT/EP2012/003047
(87) Internationale Veröffentlichungsnummer: WO 2013/029719

(56) Entgegenhaltungen:
- JP-A- 2003 168 454
- US-A1- 2001 019 789

## Beschreibung

Die Erfindung betrifft ein Verfahren zum Kühlen einer Brennstoffzelle mit einem flüssigen Kühlmedium nach der im Oberbegriff von Anspruch 1 näher definierten Art.

Brennstoffzellensysteme sind aus dem allgemeinen Stand der Technik bekannt. Diese nutzen zur Erzeugung von elektrischer Leistung Brennstoffzellen, welche beispielsweise als PEM-Brennstoffzellen ausgebildet sein können. Neben elektrischer Leistung und Produktwasser entsteht in den Brennstoffzellen immer auch eine gewisse Menge an Abwärme, welche unerwünscht ist und gemäß dem allgemeinen Stand der Technik über ein flüssiges Kühlmedium aus dem Bereich der Brennstoffzelle abgeführt wird. Typischerweise wird das flüssige Kühlmedium von wenigstens einer Kühlmittelfördereinrichtung in einem Kühlkreislauf gefördert, und durchfließt die Brennstoffzelle zur Aufnahme von Abwärme einerseits und einem Wärmetauscher als Kühler zur Abfuhr der aufgenommenen Abwärme, beispielsweise an die Umgebung, andererseits.

Insbesondere beim Betrieb der Brennstoffzellen mit Wasserstoff sind Gasleckagen innerhalb der Brennstoffzelle und des Brennstoffzellensystems ein erhebliches Sicherheitsrisiko, da aus Wasserstoff und dem Sauerstoff der Umgebungsluft zündfähige oder gar explosive Gemische entstehen können. Insbesondere im Bereich der Brennstoffzelle selbst kann es im Schadensfall zu einem Übertritt von Gasen, insbesondere von Wasserstoff, in das flüssige Kühlmedium kommen. Typischerweise sind die Brennstoffzellen als Stapel von Einzelzellen aufgebaut. Die Einzelzellen sind im Allgemeinen plattenförmig aufgebaut und weisen als Begrenzung für einen Anodenraum und einen Kathodenraum plattenförmige Elemente auf, welche mit Gaskanälen versehen sind. Der Aufbau kann beispielsweise so komplettiert werden, dass die Platten gegenpolig mit ihren Rückseiten gegeneinander gelegt sind, wobei zwischen den einzelnen Platten ein Raum für das Kühlmedium verbleibt. Alternative Aufbauten, bei welchen die benachbarten Zellen abwechselnd gegenpolig gestapelt sind, sind selbstverständlich ebenso denkbar. Auch bei diesen Aufbauten ist es üblich, im Bereich der die Einzelzellen begrenzenden Platten Räume beziehungsweise Fluidkanäle für das flüssige Kühlmedium vorzusehen. Kommt es nun zu einer Undichtheit im Bereich einer solchen Platte, oder einem Plattenbruch, dann kann Gas entweder aus dem Kathodenraum und/oder dem Anodenraum der Brennstoffzelle in das flüssige Kühlmedium eindringen. Das Gas wird dann von dem flüssigen Kühlmedium und der Kühlmittelfördereinrichtung durch das System des Kühlkreislaufs geführt und gelangt typischerweise irgendwann in einen Ausgleichsbehälter, welcher für den Volumenausgleich des Kühlmediums zwischen Stillstandstemperatur und Betriebstemperatur notwendig ist. Dieser ist im Allgemeinen mit der Umgebung verbunden. Auf diesem Weg kann das Gas dann an die Umgebung gelangen und dort gegebenenfalls - insbesondere wenn es sich um Wasserstoffgas handelt - ein zündfähiges Gemisch bilden. Daher muss im Bereich des Ausgleichsbehälters beziehungsweise im Bereich, in dem der Ausgleichsbehälter mit der Umgebung verbunden ist, bei den üblichen Aufbauten ein Wasserstoffsensor angeordnet werden, um eventuelle Sicherheitsrisiken ausschließen zu können. Dies ist hinsichtlich des Sensors selbst, der Leitungsführung für den Sensor sowie der Auswertung der Daten kritisch, teuer und fehleranfällig.

Die Aufgabe der hier vorliegenden Erfindung liegt nun darin, ein Verfahren zum Kühlen einer Brennstoffzelle anzugeben, welches diese Nachteile vermeidet, und welches mit einfachen und effizienten Mitteln, und ohne fehleranfällige Bauteile wie Sensoren oder dergleichen zu benötigen, einen sicheren und zuverlässigen Betrieb der Brennstoffzelle ermöglicht.

Erfindungsgemäß wird diese Aufgabe durch ein Verfahren mit den Merkmalen im kennzeichnenden Teil des Anspruchs 1 gelöst.

Bei dem erfindungsgemäßen Verfahren ist es vorgesehen, dass die Leistungsaufnahme der Kühlmittelfördereinrichtung mit vorgegebenen Referenzwerten verglichen wird, um durch eine Abweichung der Leistungsaufnahme von den vorgegebenen Referenzwerten Gas in dem Kühlmedium zu erkennen. Anstelle eines aufwändigen, teuren und störanfälligen Sensors im Bereich des Ausgleichsbehälters in dem Kühlkreislauf wird nun die Kühlmittelfördereinrichtung, welche in jedem Fall vorhanden sein muss, genutzt, um Gase in dem flüssigen Kühlmedium zu erkennen. Hierfür wird die Leistungsaufnahme der Kühlmittelfördereinrichtung mit entsprechenden Referenzwerten verglichen. Kommt es zu Gasblasen und Gasansammlungen im Bereich der Kühlmittelfördereinrichtung, so wird diese weniger Leistung benötigen beziehungsweise in ihrer Leistungsaufnahme schwanken, da zur Förderung der Gase weniger Energie notwendig ist, als zur Förderung des flüssigen Kühlmediums. Durch einen Vergleich mit entsprechenden Referenzwerten kann so einfach und zuverlässig Gas in dem Kühlmedium detektiert werden. Dieses Gas kann dann zwar immer noch sowohl aus dem Bereich des Kathodenraums stammen und vergleichsweise unkritische Luft oder an Sauerstoff abgereicherte Luft sein, oder es kann aus dem Bereich des Anodenraums stammen und Wasserstoff sein. Unabhängig davon, welches Gas in dem flüssigen Kühlmedium vorliegt, ist das prinzipielle Vorliegen von Gas in dem flüssigen Kühlmedium jedoch immer ein Zeichen, dass eine Undichtheit im Bereich der Brennstoffzelle selbst aufgetreten ist. Diese ist in jedem Fall eine gravierende Störung der Brennstoffzelle, welche entsprechende Gegenmaßnahmen erfordert und beispielsweise gemäß einer besonders bevorzugten Weiterbildung des erfindungsgemäßen Verfahrens eine Notabschaltung der Brennstoffzelle rechtfertigt. In jedem Fall kann so, falls es sich bei dem Gas um Wasserstoff handelt, der Austritt dieses Wasserstoffs an die Umgebung und damit eine potenzielle Gefährdung verhindert werden.

Das erfindungsgemäße Verfahren lässt sich prinzipiell immer anwenden. Gemäß einer besonders bevorzugten Weiterbildung des erfindungsgemäßen Verfahrens ist es vorgesehen, dass die Auswertung der Leistungsaufnahme ab einer Drehzahl von mehr als 30 Prozent, vorzugsweise ab einer Drehzahl von ca. 40 Prozent der Nenndrehzahl der Kühlmittelfördereinrichtung erfolgt. Die beim Auftreten von Gasen in relevanter Menge in dem Kühlmedium auftretenden Schwankungen in der Leistungsaufnahme lassen sich prinzipiell immer erfassen. Ab einer Nenndrehzahl von ca. 30 Prozent der Nenndrehzahl, insbesondere einer Drehzahl von ca. 40 Prozent der Nenndrehzahl, wird die Erfassung jedoch mit einfachen und effizienten Mitteln so gut und zuverlässig, dass die Anwendung des erfindungsgemäßen Verfahrens hier entsprechend einfach und effizient ausgestaltet werden kann. Da beim Betrieb des Kühlkreislaufs in fast allen Fällen ohnehin Drehzahlen der Kühlmittelpumpe oberhalb der genannten Grenzen vorliegen, ist auch mit diesen hinsichtlich der Detektion von Gas in dem Kühlmedium vereinfachten Aufbau zur Erkennung von Leistungsschwankungen immer noch ein sicherer und zuverlässiger Betrieb der Brennstoffzelle möglich.

Die Leistungsaufnahme lässt sich prinzipiell bei jeder Antriebsart der Kühlmittelfördereinrichtung erfassen. Dies kann jedoch entsprechend aufwändig werden. In einer besonders günstigen und vorteilhaften Weiterbildung des erfindungsgemäßen Verfahrens ist die Kühlmittelfördereinrichtung daher elektrisch angetrieben. Insbesondere bei einer solchen elektrisch angetriebenen Kühlmittelfördereinrichtung ist es sehr einfach und effizient, die elektrische Leistungsaufnahme zu erfassen und mit vorgegebenen Referenzwerten zu vergleichen, um Gas im Bereich des flüssigen Kühlmediums zu detektieren.

In einer vorteilhaften Weiterbildung des erfindungsgemäßen Verfahrens kann es ferner vorgesehen sein, dass die Referenzwerte als Referenzkurven vorgegeben sind. In einer entsprechend vorteilhaften Weiterbildung können diese entsprechend parametrisiert werden, beispielsweise in Abhängigkeit der Drehzahl der Kühlmittelfördereinrichtung oder insbesondere auch in Abhängigkeit von Druck und/oder Temperatur des Kühlmediums. Dann können unterschiedliche Referenzkurven vorgegeben werden, um Schwankungen in der Leistungsaufnahme der Kühlmittelfördereinrichtung aufgrund sich ändernder Betrieb-, Druck- und/oder Temperaturbedingungen in dem Kühlmedium nicht mit sich ändernden Leistungsaufnahmen aufgrund von Gas in dem flüssigen Kühlmedium in ihrer Zuverlässigkeit zu beeinträchtigen.

In einer weiteren sehr günstigen Ausgestaltung des erfindungsgemäßen Verfahrens ist es ferner vorgesehen, dass die Brennstoffzelle zur Erzeugung von elektrischer Antriebsleistung in einem zumindest teilweise elektrisch angetriebenen Fahrzeug genutzt wird. Insbesondere bei Fahrzeugen sind die Sicherheitsanforderungen entsprechend hoch. So können beispielsweise in dem Fahrzeug befindliche Insassen von einem zündfähigen oder explosiven Gemisch in Umgebungsluft und Wasserstoff gefährdet werden. Außerdem sind Fahrzeuge, dadurch dass sie beweglich sind, häufig in Situationen unterwegs, in denen andere Fahrzeuge und/oder Personen in der Umgebung sind beziehungsweise das Fahrzeug in eine Umgebung mit Personen außerhalb des Fahrzeugs fährt. Eine Gefährdung dieser Personen sollte ebenfalls sicher und zuverlässig ausgeschlossen werden, sodass die sehr einfache, kostengünstige und zuverlässige Sicherheitsüberwachung gemäß dem erfindungsgemäßen Verfahren insbesondere bei Fahrzeugen von besonderem Vorteil ist.

Unter Fahrzeugen im Sinne der Erfindung können dabei sämtliche Fahrzeuge auf dem Land, im Wasser oder auch in der Luft verstanden werden. Das Fahrzeug kann dabei gleisgebunden oder gleislos sein und kann dabei beispielsweise für den Individualverkehr und/oder zum Gütertransport, im Nahverkehr oder als Logistikfahrzeug eingesetzt werden. Das Fahrzeug kann mit einem Fahrzeugführer oder führerlos betrieben werden.

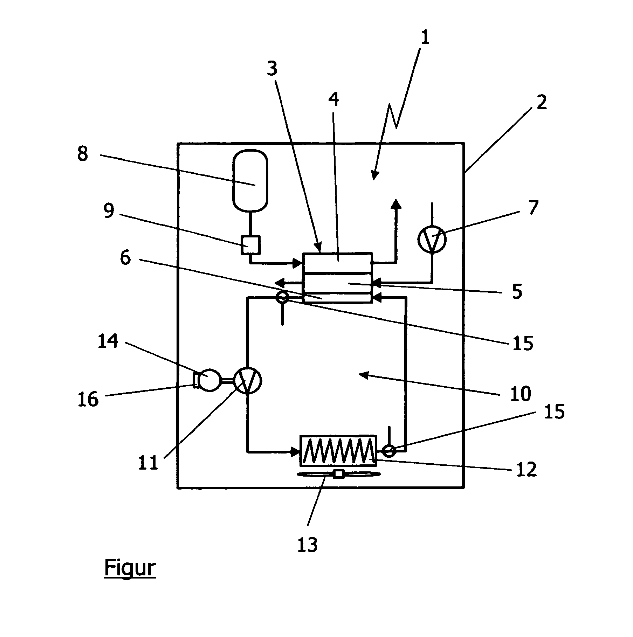

Weitere vorteilhafte Ausgestaltungen des erfindungsgemäßen Verfahrens ergeben sich aus den restlichen abhängigen Verfahrensansprüchen und werden anhand des Ausführungsbeispiels deutlich, welches nachfolgend unter Bezugnahme auf die Figur näher beschrieben ist.

Die einzige beigefügte Figur zeigt die schematische Darstellung eines sehr stark vereinfachten Brennstoffzellensystems in einem Fahrzeug.

In der einzigen beigefügten Figur ist ein Brennstoffzellensystem 1 in einer sehr stark schematisierten Darstellung zu erkennen. Das Brennstoffzellensystem 1 soll dabei in einem angedeuteten Fahrzeug 2 installiert sein. Kern des Brennstoffzellensystems 1 ist eine Brennstoffzelle 3, welche beispielhaft als PEM-Brennstoffzelle ausgebildet sein soll. Die Brennstoffzelle 3 verfügt in ihrem Inneren im Wesentlichen über drei voneinander getrennt angeordnete Räume, welche im üblichen Aufbau jeweils in Einzelzellen realisiert sind, welche dann zu einem Brennstoffzellenstapel, dem sogenannten Stack, aufgestapelt sind. Über entsprechende Leitungselemente beziehungsweise Sammler sind die einzelnen Räume der Einzelzellen des Brennstoffzellenstacks 3 dann untereinander verbunden. Die in der Figur dargestellten Räume am Beispiel einer Einzelzelle sind dabei ein Anodenraum 4, ein Kathodenraum 5 sowie ein von einem flüssigen Kühlmedium durchströmter Raum 6, welcher auch als Kühlwärmetauscher bezeichnet werden könnte. In an sich bekannter Art und Weise wird dem Kathodenraum 5 über eine Luftfördereinrichtung 7 Luft als Sauerstofflieferant zugeführt. Dem Anodenraum 4 wird beispielsweise Wasserstoff aus einem Druckgasspeicher 8 über eine Druckregel- und Dosiereinrichtung 9 zugeführt. Unverbrauchter Wasserstoff und an Sauerstoff abgereicherte Restluft verlassen dann die Brennstoffzelle über entsprechende Leitungen. Typischerweise wird der Restwasserstoff dann über katalytische Einheiten oder dergleichen aufgebraucht oder er kann im Kreislauf um den Anodenraum 4 geführt werden. Da dies für die hier beschriebene Erfindung nicht weiter relevant ist, wird auf eine entsprechende Darstellung verzichtet. Selbstverständlich kann die Peripherie des Brennstoffzellensystems 1 deutlich komplexer aufgebaut sein, als dies hier exemplarisch dargestellt ist.

Für die hier vorliegende Erfindung relevant ist lediglich der von dem flüssigen Kühlmedium durchströmte Raum 6 der Brennstoffzelle 3 sowie ein Kühlkreislauf 10 für das flüssige Kühlmedium. Dieser Kühlkreislauf 10 ist hier sehr stark vereinfacht dargestellt und soll hier lediglich zur Kühlung der Brennstoffzelle 3 selbst dienen. Selbstverständlich ist es möglich, über den Kühlkreislauf 10 auch weitere Komponenten innerhalb des Brennstoffzellensystems 1 oder in dem mit dem Brennstoffzellensystem 1 ausgerüsteten Fahrzeug 2 entsprechend zu kühlen. Außerdem können nicht dargestellte Bypassleitungen beispielsweise um den von dem flüssigen Kühlmedium durchströmten Raum 6 in der Brennstoffzelle 3 vorhanden sein, um die Kühlung zu beeinflussen. In dem Kühlkreislauf 10 strömt nun ein flüssiges Kühlmedium, typischerweise ein Gemisch aus Wasser und einem Frostschutzmittel. Dieses flüssige Kühlmedium wird von einer Kühlmittelfördereinrichtung 11 in dem Kühlkreislauf 10 umgewälzt und im Bereich eines Kühlwärmetauschers 12, welcher hier beispielhaft als Fahrzeugkühler mit einem die Durchströmung optional unterstützenden Lüfter 13 dargestellt ist, abgekühlt wird. Das abgekühlte Kühlmedium strömt dann durch den Raum 6 der Brennstoffzelle 3 und nimmt dort Abwärme der Brennstoffzelle 3 auf, welche im Bereich des Kühlwärmetauschers 12 wieder an die Umgebung abgegeben wird. Wie bereits erwähnt, können zusätzliche Einbauten, beispielsweise ein Bypass, ein Volumenausgleichsbehälter und dergleichen, vorgesehen sein. Da diese für die hier vorliegende Erfindung nicht weiter relevant sind, wurde zur Vereinfachung der Figur auf deren Darstellung verzichtet.

Die Kühlmittelfördereinrichtung 11, welche auch als Kühlmittelpumpe oder Pumpe bezeichnet wird, soll in dem hier dargestellten Ausführungsbeispiel von einem Elektromotor 14 elektrisch angetrieben sein. Sie wird dabei je nach erforderlicher Kühlleistung in dem Raum 6 der Brennstoffzelle 3 beispielsweise mit unterschiedlichen Drehzahlen angetrieben. Um einen geregelten Antrieb der Kühlmittelfördereinrichtung 11 zu gewährleisten, sind in dem Kühlkreislauf 10 typischerweise Temperatursensoren vorhanden. Zwei derartige Temperatursensoren 15 sind beispielhaft in Strömungsrichtung vor und nach dem Raum 6 der Brennstoffzelle 3 dargestellt. Neben einer Variation der Drehzahl der Kühlmittelfördereinrichtung 10 ist es außerdem möglich, die Durchströmung sowohl des Raums 6 als auch des Kühlwärmetauschers 12 über einen Bypass um die jeweilige Komponente mit einer entsprechenden Ventileinrichtung zu steuern, um so nach dem Bypass eine Mischtemperatur entsprechend einzustellen. Auch dies ist für die hier vorliegende Erfindung nicht weiter relevant und aus dem allgemeinen Stand der Technik bekannt. Auf eine Darstellung der Ventileinrichtung und der Bypassleitung wurde daher ebenfalls verzichtet.

Nun ist es so, dass es im Bereich der Brennstoffzelle 3 zu Undichtheiten zwischen den einzelnen Räumen kommen kann. Insbesondere ein sogenannter Plattenbruch der die Einzelzellen des Brennstoffzellenstacks 3 beschränkenden Platten kann zu solchen Undichtheiten führen. Besonders kritisch ist es dann, wenn Wasserstoffgas aus dem Anodenraum 4 in den Raum 6 für das flüssige Kühlmedium eindringt. Aber auch das Eindringen von Luft aus dem Kathodenraum 5 in das flüssige Kühlmedium in den Raum 6 wäre als Undichtkeit der Brennstoffzelle 3 für deren Funktion kritisch. Um ein solches kritisches Ereignis nun einfach, schnell und zuverlässig erkennen zu können, ist es bei dem hier dargestellten Aufbau des Brennstoffzellensystems 1 vorgesehen, dass ein Motorsteuergerät 16 des Elektromotors 14 für die Kühlmittelfördereinrichtung 11 entsprechend so ausgebildet ist, dass es die ohnehin erfasste Leistungsaufnahme der Kühlmittelfördereinrichtung 11 mit vorgegebenen Referenzwerten, insbesondere in Form von Referenzkurven, vergleicht.

Zur Aufnahme geeigneter Referenzkurven sind verschiedene Methoden aus dem allgemeinen Stand der Technik bekannt. Beispielsweise kann die Leistungsaufnahme von mehreren Baugleichen, als Kühlmittelfördereinrichtung 11 genutzten Pumpen entsprechend aufgenommen werden. Hierfür wird die Leistungsaufnahme der jeweiligen Pumpe über ihren ganzen möglichen Drehzahlbereich hinweg aufgenommen. Dabei ist für die spätere Referenzkurve vor allem die Leistungsaufnahme bei Trockenlauf, also die kleinstmögliche Leistungsaufnahme sowie die Leistungsaufnahme im regulären Betrieb mit geschlossener Drossel, also die minimale Leistungsaufnahme im "Normalbetrieb" von Interesse. Die so für den jeweiligen Pumpentyp gemessenen Kurven werden anschließend gemittelt, woraus sich dann eine Referenzkurve für die jeweilige Bauart der Pumpe ergibt. Diese Referenzkurven können insbesondere in Abhängigkeit der Drehzahl der Kühlmittelfördereinrichtung 11, aber auch in Abhängigkeit des Drucks und/oder der Temperatur in dem Kühlmedium, wobei insbesondere die Temperatur in jedem Fall zur Steuerung der Kühlung ohnehin erfasst wird, entsprechend parametrisiert werden. Die Referenzwerte beziehungsweise die zur Referenzkurve zusammengefassten Referenzwerte erlauben es, einem in dem Steuergerät 16 implementierten Verfahrensablauf dann sehr sicher und zuverlässig festzustellen, ob die Kühlmittelfördereinrichtung 11 so arbeitet, wie es zu erwarten ist, oder ob es Abweichungen in der Leistungsaufnahme gibt. Solche Abweichungen in der Leistungsaufnahme können dann durch die erkannte Charakteristik der Abweichung entsprechend ausgewertet werden. Von besonderem Interesse ist hierbei eine Auswertung in der Art, dass das Vorhandensein von Gas in dem flüssigen Kühlmedium erkannt werden kann. Ein solches Gas kann typischerweise nur dann in dem flüssigen Kühlmedium auftreten, wenn eine Undichtheit zwischen einem oder beiden Räumen 4, 5 der Brennstoffzelle 3 und dem mit dem flüssigen Kühlmedium durchströmten Raum 6 der Brennstoffzelle 3 aufgetreten ist. Über eine solche Gasblasenerkennung beziehungsweise Trockenlauferkennung der Kühlmittelfördereinrichtung 11 kann somit einfach, effizient und ohne die Verwendung eines störanfälligen Wasserstoffsensors im Bereich eines Ausgleichsbehälters beziehungsweise der aus dem Bereich eines Ausgleichsbehälters austretenden Gase des Kühlkreislaufs 10 sicher und zuverlässig auf Gase im Bereich des flüssigen Kühlmediums zurückgeschlossen werden. Dadurch kann sowohl die Kühlmittelfördereinrichtung 11 selbst als auch die Brennstoffzelle 3 vor weiteren Beschädigungen geschützt werden, insbesondere in dem eine Notabschaltung des Brennstoffzellensystems 1 erfolgt. Dies erhöht einerseits die Sicherheit und die Lebensdauer der beteiligten Komponenten des Brennstoffzellensystems 1, da weiterer Schaden von der Kühlmittelfördereinrichtung 10 und der Brennstoffzelle 3 abgewandt wird und erhöht andererseits die Sicherheit von in der Umgebung des Fahrzeugs 2 oder in dem Fahrzeug 2 selbst befindlichen Personen.

Dem Erfinder hat sich gezeigt, dass in den unteren Drehzahlbereichen die Unterschiede zwischen den Referenzkurven und den gemessenen Kurven auch beim Auftreten eines Trockenlaufs sehr klein sind. In diesem Bereich ist es daher sehr schwierig einen zuverlässigen Vergleich zu realisieren, welcher eine sichere Detektion des Trockenlaufs ermöglicht. Sehr einfach und effizient lässt sich eine solche Trockenlauferkennung jedoch im Bereich der Kühlmittelfördereinrichtung 11 dann realisieren, wenn während der Detektion die Pumpendrehzahl größer als ca. 40 Prozent der Nenndrehzahl der Kühlmittelfördereinrichtung 11 ist. Dies ist jedoch im regulären Betrieb des Kühlkreislaufs 10 des Brennstoffzellensystems 1 typischerweise fast immer der Fall. Gasleckagen ab einem Gaseintrag von ca. 2 Litern pro Minute lassen sich dann sehr zuverlässig und effizient erkennen. Das Verfahren ist dabei einfacher, kostengünstiger und weniger fehleranfällig als es entsprechende Gassensoren im Bereich der Verbindung des Kühlkreislaufs 10 mit der Umgebung wären. Außerdem kann ein effizienter Schutz der Kühlmittelfördereinrichtung 11 unmittelbar mit erfolgen, was durch die Sensoren aufgrund der zeitlichen Verzögerung zwischen dem Gaseintrag in das flüssige Kühlmedium und dem Detektieren desselben nicht möglich wäre.

## Patentansprüche

1. Verfahren zum Kühlen einer Brennstoffzelle (3) mit einem flüssigen Kühlmedium, wobei von den der Brennstoffzelle zugeführten Edukten und den von der Brennstoffzelle abgeführten Produkten zumindest eines bei Betriebsbedingungen gasförmig ist, wobei das Kühlmedium mit einer Kühlmittelfördereinrichtung (11) durch die Brennstoffzelle (3) gefördert wird,
**dadurch gekennzeichnet, dass**
die Leistungsaufnahme der Kühlmittelfördereinrichtung (11) mit vorgegebenen Referenzwerten verglichen wird, um durch eine Abweichung der Leistungsaufnahme von den vorgegebenen Referenzwerten Gas in dem flüssigen Kühlmedium zu erkennen.

2. Verfahren nach Anspruch 1,
**dadurch gekennzeichnet, dass**
bei Erkennen von Gas eine Notabschaltung eines Kühlkreislaufs (10) und/oder der Brennstoffzelle (3) erfolgt.

3. Verfahren nach Anspruch 1 oder 2,
**dadurch gekennzeichnet, dass**
die Auswertung der Leistungsaufnahme ab einer Drehzahl der Kühlmittelfördereinrichtung von mehr als 30 Prozent, vorzugsweise von mehr als 40 Prozent der Nenndrehzahl der Kühlmittelfördereinrichtung (11) erfolgt.

4. Verfahren nach Anspruch 1, 2 oder 3,
**dadurch gekennzeichnet, dass**
die Kühlmittelfördereinrichtung (11) elektrisch angetrieben wird.

5. Verfahren nach Anspruch 4,
**dadurch gekennzeichnet, dass**
der Vergleich der Leistungsaufnahme der Kühlmittelfördereinrichtung (11) mit den Referenzwerten in einem Steuergerät (16) eines Elektromotors (14) zum Antrieb der Kühlmittelfördereinrichtung (11) implementiert wird.

6. Verfahren nach einem der Ansprüche 1 bis 5,
**dadurch gekennzeichnet, dass**
die Referenzwerte als Referenzkurven vorgegeben werden.

7. Verfahren nach einem der Ansprüche 1 bis 6,
**dadurch gekennzeichnet, dass**
die Referenzwerte in Abhängigkeit der Drehzahl der Kühlmittelfördereinrichtung (11) unterschiedlich vorgegeben werden.

8. Verfahren nach einem der Ansprüche 1 bis 7,
**dadurch gekennzeichnet, dass**
die Referenzwerte in Abhängigkeit von Druck und/oder Temperatur des Kühlmediums unterschiedlich vorgegeben werden.

9. Verfahren nach einem der Ansprüche 1 bis 8,
**dadurch gekennzeichnet, dass**
die Brennstoffzelle (3) zur Erzeugung von elektrischer Antriebsleistung in einem zumindest teilweise elektrisch angetriebenen Fahrzeug (2) genutzt wird.

## Claims

1. Method for cooling a fuel cell (3) with a liquid cooling medium, wherein at least one of the educts supplied to the fuel cell and of the products removed from the fuel cell is gaseous at operating conditions, the cooling medium being conveyed through the fuel cell (3) by a coolant conveying device (11),
**characterised in that**
the power consumption of the coolant conveying device (11) is compared to preset reference values in order to detect gas in the liquid cooling medium from a deviation of the power consumption from the preset reference values.

2. Method according to claim 1,
**characterised in that**
on the detection of gas, a cooling circuit (10) and/or the fuel cell (3) is/are subjected to an emergency shutdown.

3. Method according to claim 1 or 2,
**characterised in that**
the power consumption is evaluated from a rotational speed of the coolant conveying device which is above thirty percent, preferably above 40 percent, of the nominal rotational speed of the coolant conveying device (11).

4. Method according to claim 1, 2 or 3,
**characterised in that**
the coolant conveying device (11) is driven electrically.

5. Method according to claim 4,
**characterised in that**
the power consumption of the coolant conveying device (11) is compared to the reference values in a control unit (16) of an electric motor (14) provided for driving the coolant conveying device (11).

6. Method according to any of claims 1 to 5,
**characterised in that**
the reference values are preset in the form of reference characteristics.

7. Method according to any of claims 1 to 6,
**characterised in that**
the reference values are preset differently as a function of the rotational speed of the coolant conveying device (11).

8. Method according to any of claims 1 to 7,
**characterised in that**
the reference values are preset differently as a function of the pressure and/or the temperature of the cooling medium.

9. Method according to any of claims 1 to 8,
**characterised in that**
the fuel cell (3) is used for the generation of drive power in a vehicle (2) which is at least partially driven electrically.

## Revendications

1. Procédé de refroidissement d'une pile à combustible (3) à l'aide d'un agent liquide de refroidissement, parmi les produits de départ amenés à la pile à combustible et les produits évacués par la pile à combustible, au moins une substance se présentant sous forme gazeuse en conditions de fonctionnement, et l'agent de refroidissement étant transporté à travers la pile à combustible (3) au moyen d'un dispositif de transport (11) d'agent de refroidissement, **caractérisé en ce que** la puissance absorbée du dispositif de transport (11) d'agent de refroidissement est comparée à des valeurs de référence prédéfinies, afin de détecter la présence de gaz dans l'agent de refroidissement liquide en cas d'écart entre la puissance absorbée et les valeurs de référence prédéfinies.

2. Procédé selon la revendication 1, **caractérisé en ce qu'**un arrêt d'urgence d'un circuit de refroidissement (10) et/ou de la pile à combustible (3) est effectué en cas de détection de gaz.

3. Procédé selon la revendication 1 ou 2, **caractérisé en ce que** l'évaluation de la puissance absorbée s'effectue à une vitesse de rotation du dispositif de transport d'agent de refroidissement de plus de 30 %, de préférence de plus de 40 % de la vitesse de rotation nominale du dispositif de transport d'agent de refroidissement (11).

4. Procédé selon la revendication 1, 2 ou 3, **caractérisé en ce que** le dispositif de transport d'agent de refroidissement (11) est entraîné électriquement.

5. Procédé selon la revendication 4, **caractérisé en ce que** la comparaison de la puissance absorbée du dispositif de transport (11) d'agent de refroidissement à des valeurs de référence dans un appareil de commande (16) d'un moteur électrique (14) est mise en oeuvre pour l'entraînement du dispositif de transport (11) d'agent de refroidissement.

6. Procédé selon l'une quelconque des revendications 1 à 5, **caractérisé en ce que** les valeurs de référence sont prédéfinies en tant que courbes de référence.

7. Procédé selon l'une quelconque des revendications 1 à 6, **caractérisé en ce que** les valeurs de référence sont prédéfinies en fonction de la vitesse de rotation du dispositif de transport (11) d'agent de refroidissement.

8. Procédé selon l'une quelconque des revendications 1 à 7, **caractérisé en ce que** les valeurs de référence sont prédéfinies différemment en fonction de la pression et/ou de la température de l'agent de refroidissement.

9. Procédé selon l'une quelconque des revendications 1 à 8, **caractérisé en ce que** la pile à combustible (3) est utilisée pour produire de la puissance de propulsion électrique dans un véhicule (2) entraîné du moins en partie électriquement.
